# EUROPÄISCHE PATENTSCHRIFT

(11) **EP 0 306 851 B1**
(45) Veröffentlichungstag und Bekanntmachung des Hinweises auf die Patenterteilung: **29.12.1993**
(21) Anmeldenummer: 88114324.2
(22) Anmeldetag: 02.09.1988
(51) Int. Cl.: F16D 65/22, F16D 65/00

(54) **Einrichtung zur Lagerung der Nockenwelle für die Betätigung der Bremsbacken einer Trommelbremse für Fahrzeuge u.dgl.**
Bearing pad device of a camshaft for the application of the brake shoes of a drum brake for vehicles and suchlike
Dispositif de logement de l'arbre à came pour l'application des mâchoires d'un frein à tambour pour véhicules et similaires

(30) Priorität: 09.09.1987 DE 3730191
(43) Veröffentlichungstag der Anmeldung: 15.03.1989
(73) Patentinhaber: Otto Sauer Achsenfabrik Keilberg, 63856 Bessenbach (DE)
(72) Erfinder: Koschinat, Hubert B. KEIL & SCHAAFHAUSEN, D-6000 Frankfurtam Main 1 (DE)
(74) Vertreter: Keil, Rainer A., Dipl.-Phys. Dr.

(56) Entgegenhaltungen:
- EP-A- 0 158 024
- DE-B- 1 208 569
- US-A- 2 719 065
- US-A- 3 497 275

## Beschreibung

Die Erfindung bezieht sich auf eine Einrichtung zur Lagerung der Nockenwelle für die Betätigung der Bremsbacken einer Trommelbremse für Fahrzeuge u.dgl., bei welcher die Nockenwelle über einen Lagerabschnitt mittels einer Lagerbuchse in einem Lagerauge des Bremsträgers gelagert und bspw. mittels Spannscheibe und Sicherungsring axial unverrückbar gehalten ist sowie benachbart des Lagerabschnitts einen z.B. S-förmigen Nocken zur Betätigung der Bremsbacken trägt.

Bei einer derartigen bspw. aus der US-A-3 4 97 275 A bekannten Lagereinrichtung besteht das Problem der Überfettung und damit Beeinträchtigung der Bremswirkung, wenn überschüssiges Fett auf die wirksamen Flächen der Bremsbacken und/oder der Bremstrommel gelangt. Die bekannte Nockenwellenlagerung ist an den jeweiligen Enden über O-Ringe abgedichtet. Nicht beschrieben ist, in welcher Art und Weise nachgedrücktes Fett durch die Nockenwellenlagerung gepreßt wird und es ist nicht auszuschließen, daß verbrauchtes Fett insbesondere am nockenseitigen Abschnitt der Lagerung ins Freie gelangt und zu einem Verfetten der Bremse bzw. Bremsbacken führt. Die beiden Endabschnitte der Nockenwellenlagerung sind identisch ausgebildet, so daß keine besonderen Maßnahmen ersichtlich sind, die ein Austreten von überschüssigem Fett am nockenseitigen Abschnitt der Lagerung zu vermeiden.

Aus der EP-A-0 158 024 ist eine Lagerbuchse für ein Gleitlager einer Bremswelle einer Trommelbremse mit einer an einem Ende auf der Außenseite umlaufenden, ringförmigen Fettkammer für den Fetteintritt, von dieser in axialer Richtung abzweigenden Verteilungskanälen und in deren Verlängerung auf der Innenseite angeordneten, in entgegengesetzter axialer Richtung verlaufenden Schmierkanälen bekannt. Um die Fettverteilung und die Ausbildung eines geschlossenen Schmierfilms zu verbessern, mündet jeder Verteilungskanal in einer Bohrung, die auf der Innenseite durch einen umlaufenden ersten Ringkanal miteinander verbunden sind, wobei die inneren Schmierkanäle zwischen den Verteilungskanälen liegend und parallel zu diesen verlaufenden zwischen den Bohrungen an den ersten Ringkanal angeschlossen sind. Die Schmierkanäle münden in einen umlaufenden zweiten Ringkanal, der an wenigstens einem Austrittskanal angeschlossen ist. Das Fett wird durch einen Schmiernippel in das Lager eingepreßt und verteilt sich sodann über die Fettkammer, die Verteilungskanäle, die Bohrung und den ersten Ringkanal in die Schmierkanäle. Der Fettüberschuß kann durch den zweiten Ringkanal und die beiden Austrittskanäle ins Freie austreten, wobei durch das austretende Fett angezeigt wird, daß die Schmierkanäle gefüllt sind. Maßnahmen, das aus dem Lager austretende Fett in einer Fettkammer aufzunehmen und zu sammeln, um ein Verfetten der Bremse bzw. Bremsbacke zu vermeiden, sind dieser Druckschrift nicht zu entnehmen. Zwar ist innerhalb des Lagers eine Fettkammer vorgesehen, die jedoch zur Aufnahme von frischem Fett, das über einen Schmiernippel der Lagerung zugeführt wird, dient.

Aus der US-A-2 719 065 ist ein Gleitlager für eine Welle bekannt, die mit einer relativ hohen Drehzahl beaufschlagt wird. Bevorzugt findet diese Lagerung Anwendung bei Papierherstellungsmaschinen, die relativ schwere Zylinder bzw. Walzen aufweisen, welche in eine schnelle Rotation versetzt werden. Insbesondere beim Ingangsetzen der Maschine sind aufgrund eines während des Stillstandes fehlenden Schmierfilms in dem Lager hohe Drehmomente erforderlich. Das Gleitlager sorgt durch seine spezielle Ausbildung dafür, daß die beim Anlauf der Maschine erforderlichen Drehmomente erheblich reduziert werden.

Aus der DE-B-1 208 569 ist eine fettgeschmierte Bremsnockenwellenlagerung für Backenbremsen mit einer Buchse bekannt, in der die Welle nach außen abgedichtet gelagert ist, sowie mit einer innerhalb der Lagerbuchse zwischen der Welle und der Buchse angeordneten Lagerhülse, die mindestens eine über eine entsprechende Bohrung der Lagerbuchse mit einer Fettzuführleitung in Verbindung stehende Bohrung aufweist. Die Lagerhülse weist außer den mit der Fettzuführleitung in der Lagerbuchse in Verbindung stehenden Einlaßbohrungen auch eine oder mehrere zu einer Fettableitung in der Lagerbuchse führende Auslaßbohrungen auf, denen ebenso wie den Einlaßbohrungen je eine sie untereinander verbindende Nut zugeordnet ist. Besondere Maßnahmen, im Bereich des Lagerauges der Nockenwelle eine Fettkammer vorzusehen, sind dieser Druckschrift nicht zu entnehmen.

Der Erfindung liegt die Aufgabe zugrunde, eine Nockenwellenlagerung der eingangs genannten Art dahingehend weiterzubilden, daß eine Verfettung der Bremse mit Sicherheit vermieden und eine Wartunsarmut bzw. Wartungsfreiheit erzielt wird.

Diese Aufgabe wird erfindungsgemäß im wesentlichen dadurch gelöst, daß das Lagerauge jenseits des Nockens über den Lagerabschnitt hinaus eine Verlängerung zur Bildung einer die Nockenwelle umgebenden ersten Fettkammer aufweist, die Verlängerung außerhalb der Bremse und/oder außerhalb eines Abdeckbleches für die Bremse liegt und die Spannscheibe das offene Ende der ersten Fettkammer abdeckt. Durch diese Maßnahmen kann überschüssiges Fett aus dem Lagerabschnitt in die Fettkammer austreten, ohne daß es zu einer Verfettung der Bremse kommt, da das Ende der Verlängerung außerhalb der Bremse und/oder außerhalb des Abdeckbleches für die Bremse liegt. Fett kann somit nicht in die Bremse gelangen. Dadurch, daß die Spannscheibe das offene Ende der Fettkammer abdeckt, wird die erste Fettkammer nach außen hin begrenzt und der Fettaustritt erschwert. Die vorgelagerte Fettkammer der erfindungsgemäßen Lagerung sorgt dafür, daß Schmutz- bzw. Spritzwasser sich mit dem in der Kammer befindlichen Fett vermischt, ohne daß Verunreinigungen in die eigentliche Lagerung eindringen können. Beim Nachschmieren wird der verschmutzte Fettanteil herausgespült und durch frisches Schmiermittel ersetzt. Durch die einseitige Öffnung der Lagerung ist ebenfalls sichergestellt, daß das Schmiermittel nicht über den O-Ring in die Bremse eintreten kann. Dadurch, daß eine Verschmutzung der Lagerstelle zuverlässig verhindert wird und daß das in der Fettkammer befindliche Fett über einen längeren Zeitraum hinweg auskühlt, ist außerdem sichergestellt, daß die Lagerung sauber gehalten und in gewissem Umfang nachgeschmiert wird, was zu der angestrebten Wartungsarmut führt.

Die Lagerbuchse kann für die Schmiermittelzufuhr in ihrer an die Innenfläche des Lagerauges angrenzenden Außenfläche und/oder das Lagerauge in seinem an die Außenfläche der Lagerbuchse angrenzenden Innenfläche wenigstens eine umlaufende Rille aufweisen.

Dabei steht vorzugsweise die umlaufende Rille mit einer Fetteintrittsbohrung in Verbindung, welche die Zufuhr von Fett in den Lagerspalt zwischen Lagerbuchse und Nockenwelle sicherstellt.

In die jeweilige Rille kann ferner ein Fettzufuhrkanal münden, um eine einfache Nachschmierung zu gestatten.

Die Lagerbuchse kann aber auch zusätzlich oder stattdessen als selbstschmierende, z.B. ölgetränkte Kunststoffbuchse ausgebildet sein, um das Erfordernis einer Wartung noch weiter zu verringern.

Vorzugsweise sollte die Lagerbuchse Trockenlaufeigenschaften aufweisen, damit auch bei einer verspäteten Wartung die Bremse voll funktionsfähig bleibt.

Dabei ist es besonders günstig, wenn die Lagerbuchse als Zweistoffbuchse ausgebildet ist, mit einer inneren, z.B. Graphit enthaltenden Gleitschicht und einer äußeren, z.B. metallenen Trägerschicht, wobei als Metall insbesondere Stahl oder Messing in Betracht zu ziehen sind.

Der Lagerspalt zwischen Lagerauge und Nockenwelle ist ferner vorzugsweise wenigstens nockenseitig z.B. mittels Radialwellendichtung abgedichtet, weil Radialwellendichtungen im Vergleich zu herkömmlichen O-Ringen einen verhätlnismäßig großen Federweg in Radialrichtung aufweisen.

Es ist aber auch möglich, daß das offene Ende der ersten Fettkammer z.B. mittels Radialwellendichtung abgedichtet ist, so daß praktisch kein Schmierfett entweichen und noch größere Wartungsarmut erreicht werden kann.

Gemäß einem weiteren Erfindungsgedanken ist das offene Ende der ersten Fettkammer, ggf. einschließlich der Spannscheibe mit dem Sicherungsring, von einer faltenbalgartigen Dichtmanschette unter Bildung einer zweiten Fettkammer übergriffen. Die Dichtmanschette kann dabei mittels eines Haltewulstes in einer auf der Außenseite der Verlängerung des Lagerauges umlaufenden Nut eingreifen und mit einem faltenbalgartigen Abschnitt dichtend an der Nockenwelle anliegen. Als Material für die Dichtmanschette kommt insbesondere Gummi oder Kunststoff infrage. Eine so ausgestattete Nockenwellenlagerung ist praktisch wartungsfrei. Wegen des großen zur Verfügung stehenden Volumens für einen Schmierfettvorrat ist eine Nachschmierung praktisch nicht mehr erforderlich. Die Dichtmanschette verhindert ein Eindringen von Schmutz, Wasser oder Dampf beim Fahren oder Reinigen des Fahrzeuges.

Dabei kann, um die gesamte Lagerung einschließlich der Fettkammern bei der Erstschmierung zu Füllen, in diese unmittelbar eine verschließbare Schmierbohrung münden.

Ein weiteres Erfindungsmerkmal besteht darin, daß der Durchmesser des innerhalb der ersten Fettkammer liegenden Abschnitts der Nockenwelle geringfügig kleiner als der Durchmesser des Lagerabschnitts der Nockenwelle ist. Hierdurch kann bei einer Nockenwellenlagerung der erfindungsgemäßen Art aber auch bei anderen Nockenwellenlagerungen erreicht werden, daß die Nockenwelle trotz Aufrostens außerhalb des Lagerabschnittes leicht aus dem Lagerauge demontiert werden kann, was zu derjenigen Seite hin erfolgen muß, auf welcher der Nocken liegt.

In Weiterbildung dieses Erfindungsgedankens kann auch der Durchmesser des im Anschluß an die Verlängerung des Lagerauges außerhalb der ersten Fettkammer liegenden Abschnitts der Nockenwelle geringfügig kleiner als der Durchmesser des innerhalb der ersten Fettkammer liegenden Abschnitts der Nockenwelle sein. Hierdurch wird dem Umstand Rechnung getragen, daß beim Lackieren des Fahrzeuges häufig auch der aus der ersten Fettkammer herausragende Abschnitt der Nockenwelle mitlackiert wird, was - bei herkömmlichem gleichmäßigen Durchmesser - die Demontierbarkeit der Nockenwelle beeinträchtigt. Diese Beeinträchtigung wird durch das letztgenannte Erfindungsmerkmal beseitigt.

Aus den zuvor genannten Erläuterungen ergibt sich, daß die Durchmesserreduzierung der Nockenwelle innerhalb der ersten Fettkammer in der Größenordnung der zu erwartenden Aufrostung und die anschließende Durchmesseverringerung außerhalb der ersten Fettkammer im Vergleich zum Durchmesser im Lagerabschnitt in der Größenordnung der zu erwartenden Lackschicht liegen sollte.

Weitere Ziele, Merkmale, Vorteile und Anwendungsmöglichkeiten der vorliegenden Erfindung ergeben sich aus der nachfolgenden Beschreibung von Ausführungsbeispielen anhand der Zeichnung. Dabei bilden alle beschriebenen und/oder bildlich dargestellten Merkmale für sich oder in beliebiger sinnvoller Kombination den Gegenstand der vorliegenden Erfindung auch unabhängig von ihrer Zusammenfassung in den Ansprüchen oder deren Rückbeziehung.

Es zeigen:
- Fig.1: in Seitenansicht, teilweise geschnitten, eine erfindungsgemäße Nockenwellenlagerung gemäß einem Ausführungsbeispiel,
- Fig. 2: die Darstellung einer anderen erfindungsgemäßen Nockenwellenlagerung in gleicher Darstellung, und
- Fig. 3: in wiederum gleicher Darstellung ein drittes Ausführungsbeispiel einer erfindungsgemäßen Nockenwellenlagerung.

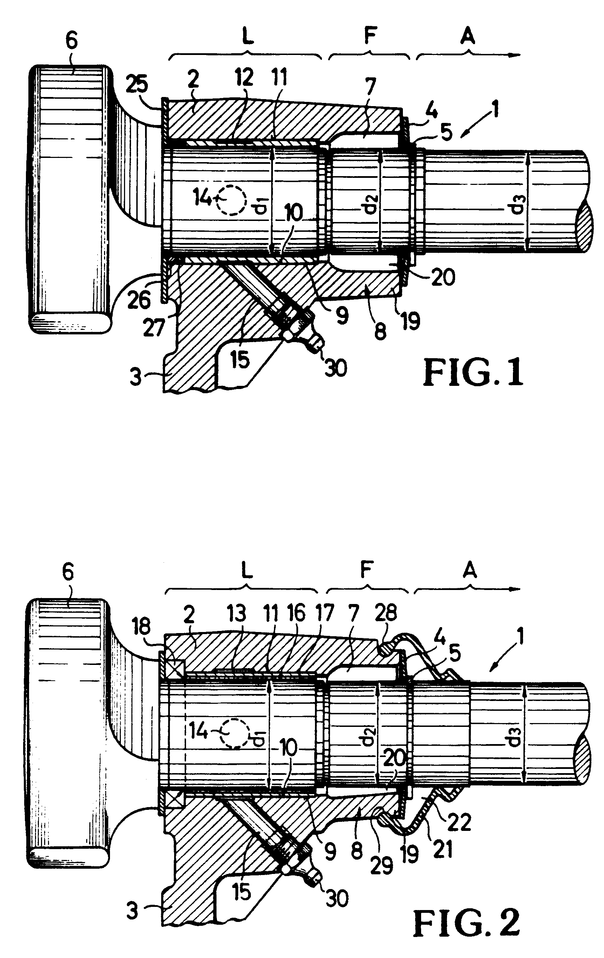

Gemäß Fig. 1 ist eine Nockenwelle 1 für die Betätigung der Bremsbacken einer Trommelbremse für Fahrzeuge u.dgl. über einem Lagerabschnitt L mittels einer Lagerbuchse 9 in einem Lagerauge 2 des (teilweise weggebrochenen) Bremsträgers 3 gelagert. Dabei wird die Nockenwelle 1 mittels einer Spannscheibe 4, welche am äußeren Ende 19 einer Verlängerung 8 des Lagerauges 2 angreift und mit einem Sicherungsring 5 zusammenwirkt, axial unverrückbar an eine Scheibe 25 angrenzend an den S-förmigen Nocken 6 gehalten. In dem Lagerspalt zwischen Scheibe 25 und Lagerbuchse 9 sind ein Distanzring 26 und ein O-Ring 27 angeordnet. Die jenseits des Nockens 6 liegende Verlängerung 8 des Lagerauges 2 über den Lagerabschnitt L bildet aufgrund ihres Abstandes von der Nockenwelle 1 eine diese umgebende erste Fettkammer 7. In der Außenfläche 11 der Lagerbuchse 9 befindet sich eine Rille 12, an welche außen die Innenfläche 10 des Lagerauges 2 angrenzt. Die Rille 12 kann einen Fettvorrat aufnehmen, welcher beispielsweise bei der Erstschmierung oder bei nachfolgenden Schmierungen über einen Schmiernippel 30 und einen Fettzufuhrkanal 15 mit Schmierstoff gefüllt werden kann. Die Überführung des Schmierstoffes auf die Oberfläche des Lagerabschnittes L der Nockenwelle 1 erfolgt über eine Fetteintrittsbohrung 14. Wie man aus der Zeichnung erkennt, kann überschüssiges Fett aus dem Lagerspalt von der Fettkammer 7 aufgenommen werden, welche an ihrem offenen Ende 20 von der Spannscheibe 4 mit dem Sicherungsring 5 begrenzt wird. Die Verlängerung 8 ist soweit nach außen gezogen, daß etwa aus der ersten Fettkammer 7 hinaustretendes Fett nicht auf die Bremse gelangen und deren Bremswirkung nicht beeinträchtigen kann. Die Lagerbuchse 9 kann auch stattdessen oder zusätzlich als selbstschmierende, z.B. ölgetränkte Kunststoffbuchse ausgebildet sein und insbesondere auch Trockenlaufeigenschaften aufweisen. Ferner kann die erste Fettkammer 7, die von der Spannscheibe 4 begrenzt ist, mittels einer (nicht dargestellten) Radialwellendichtung wirksam abgedichtet sein. Wie man aus der Zeichnung ebenfalls erkennen kann, ist der Durchmesser d₂ des innerhalb der ersten Fettkammer 7 liegenden Abschnitts F der Nockenwelle 1 geringfügig kleiner als der Durchmesser d₁ des Lagerabschnitts L der Nockenwelle 1. Hierdurch wird gewährleistet, daß auch bei einem Aufrosten der Nockenwellenoberfläche außerhalb des Lagerabschnitts L die Nockenwelle 1 leicht (in der Zeichnung nach links) aus dem Lagerauge 2 demontiert werden kann. Aus der Zeichnung erkennt man ferner, daß der Durchmesser d₃ des im Abschluß an die Verlängerung 8 des Lagerauges 2 außerhalb der ersten Fettkammer 7 liegenden Abschnitts A der Nockenwelle 1 abermals geringfügig kleiner als der Durchmesser d₂ des innerhalb der ersten Fettkammer 7 liegenden Abschnitts F der Nockenwelle 1 ist. Hierdurch wird dem Umstand Rechnung getragen, daß der Abschnitt A der Nockenwelle 1 beim Lackieren des Fahrzeuges unter Umständen mit lackiert wird. Durch die Reduzierung des Durchmessers d₃ wird gewährleistet, daß die Nockenwelle 1 auch dann noch leicht (in der Zeichnung nach links) aus dem Lagerauge 2 demontiert werden kann.

Die Ausführungsform der erfindungsgemäßen Nockenwellenlagerung gemäß Fig. 2 ist ähnlich derjenigen von Fig. 1, sie unterscheidet sich jedoch in einigen Merkmalen, die hier besonders erwähnt seien. Zunächst ist der Lagerspalt zwischen Nockenwelle 1 und Lagerauge 2 nockenseitig mit einer Radialwellendichtung 18 abgedichtet, welche im Vergleich zu herkömmlichen O-Ringen einen verhältnismäßig großen Federweg in Radialrichtung haben. Die Lagerbuchse 9 selbst ist als Zweistoffbuchse ausgeführt, und zwar mit einer inneren, z.B. Graphit enthaltenden Gleitschicht 16 und einer äußeren, z.B. metallenen Trägerschicht 17. In diesem Falle liegt die Rille 13 für eine einfachere Herstellbarkeit der somit mit gleicher Wandstärke ausgestatteten Lagerbuchse 9 in der Innenfläche 10 des Lagerauges 2. Das offene Ende 20 der ersten Fettkammer 7 ist nicht nur von der Spannscheibe 4 mit Sicherungsring 5 begrenzt, sondern auch noch von einer faltenbalgartigen Dichtmanschette 21 unter Bildung einer zweiten Fettkammer 22 übergriffen, in die zwar von innen Schmierfett aber von außen kein Schmutz, Dampf oder Wasser eintreten kann. Die Dichtmanschette 21 wird mittels eines ringförmigen Haltewulstes 28, welcher in eine Nut 29 am äußeren Ende 19 der Verlängerung 8 eingreift, sicher gehalten. Auch bei dieser Ausführungsform ist ein Nachschmieren bspw. über den Schmiernippel 30 und den Fettzufuhrkanal 15 möglich, wobei wohl die erste Fettkammer 7 als auch die zweite Fettkammer 22 überschüssigen Schmierstoff aufnehmen können. Diese Ausführungsform der Erfindung ist daher noch wartungsärmer als die in Fig. 1 dargestellte.

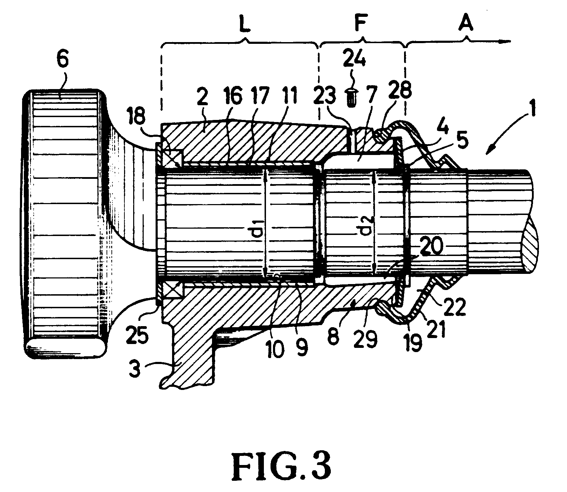

Fig. 3 zeigt eine praktisch wartungsfreie Nockenwellelagerung. Deswegen ist auch in diesem Falle im Vergleich zu der Ausführungsform von Fig. 2 kein Schmiernippel 30, kein Fettzufuhrkanal 15 und keine Rille 13 in der Innenfläche 10 des Lagerauges 2 mehr gezeigt, da eine Nachschmierung an dieser Stelle unnötig ist. Stattdessen mündet unmittelbar in die erste Fettkammer 7 eine Schmierbohrung 23, welche bei der Erstschmierung zu einer Füllung der ersten Fettkammer 7 und der zweiten Fettkammer 22 dient und dann mittels eines Verschlußstopfens 24 verschlossen wird. Ein solcher Schmierstoffvorrat reicht praktisch für die gesamte Lebensdauer der Nockenwellenlagerung. Sie braucht lediglich bei Verschleiß bspw. der Zweistofflagerbuchse 9 und/oder der Dichtmanschette 21 und/oder der Radialwellendichtung 18 erneurt zu werden. Auch hier ist statt der Dichtma schnette 21 eine (nicht dargestellte) Radialwellendichtung möglich, ebenso wie die Kombination mit anderen Merkmalen der in den Fig. 1 und 2 veranschaulichten Ausführungsbeispiele in Erwägung gezogen werden können.

### Bezugszeichenliste:

- 1: Nockenwelle
- 2: Lagerauge
- 3: Bremsträger
- 4: Spannscheibe
- 5: Sicherungsring
- 6: Nocken
- 7: erste Fettkammer
- 8: Verlängerung
- 9: Lagerbuchse
- 10: Innenfläche
- 11: Außenfläche
- 12: Rille
- 13: Rille
- 14: Fetteintrittsbohrung
- 15: Fettzfuhrkanal
- 16: Gleitschicht
- 17: Trägerschicht
- 18: Radialwellendichtung
- 19: äußeres Ende
- 20: offenes Ende
- 21: Dichtmanschette
- 22: zweite Fettkammer
- 23: Schmierbohrung
- 24: Verschlußstopfen
- 25: Scheibe
- 26: Distanzring
- 27: O-Ring
- 28: Haltewust
- 29: Nut
- 30: Schmiernippel
- L: Lagerabschnitt
- F: Abschnitt
- A: Abschnitt

## Patentansprüche

1. Einrichtung zur Lagerung der Nockenwelle (1) für die Betätigung der Bremsbacken einer Trommelbremse für Fahrzeuge u.dgl., bei welcher die Nockenwelle (1) über einen Lagerabschnitt (L) mittels einer Lagerbuchse (9) in einem Lagerauge (2) des Bremsträgers (3) gelagert und bspw. mittels Spannscheibe (4) und Sicherungsring (5) axial unverrückbar gehalten ist sowie benachbart des Lagerabschnitts (L) einen z.B. S-förmigen Nocken (6) zur Betätigung der Bremsbacken trägt, dadurch gekennzeichnet, daß das Lagerauge (2) jenseits des Nockens (6) über den Lagerabschnitt (L) hinaus eine Verlängerung (8) zur Bildung einer die Nockenwelle (1) umgebenden ersten Fettkammer (7) aufweist, die Verlängerung (8) außerhalb der Bremse und/oder außerhalb des Abdeckbleches für die Bremse liegt und die Spannscheibe (4) das offene Ende (20) der ersten Fettkammer (7) abdeckt.

2. Einrichtung nach Anspruch 1, dadurch gekennzeichnet, daß die Lagerbuchse (9) in ihrer an die Innenfläche (10) des Lagerauges (2) angrenzenden Außenfläche (11) und/oder das Lagerauge (2) in seinem an die Außenfläche (11) der Lagerbuchse (9) angrenzenden Innenfläche (10) wenigstens eine umlaufende Rille (12, 13) aufweist.

3. Einrichtung nach Anspruch 2, dadurch gekennzeichnet, daß die Rille (12, 13) mit einer Fetteintrittsbohrung (14) in Verbindung steht.

4. Einrichtung nach Anspruch 2 oder 3, dadurch gekennzeichnet, daß in die Rille (12, 13) ein Fettzufuhrkanal (15) mündet.

5. Einrichtung nach einem der Ansprüche 1 bis 4, dadurch gekennzeichnet, daß die Lagerbuchse (9) als selbstschmierende, z.B. ölgetränkte Kunststoffbuchse ausgebildet ist.

6. Einrichtung nach einem der Ansprüche 1 bis 5, dadurch gekennzeichnet, daß die Lagerbuchse (9) Trockenlaufeigenschaften aufweist.

7. Einrichtung nach einem der Ansprüche 1 bis 6, dadurch gekennzeichnet, daß die Lagerbuchse (9) als Zweistoffbuchse ausgebildet ist, mit einer inneren, z.B. Graphit enthaltenden Gleitschicht (16) und einer äußeren, z.B. metallenen Trägerschicht (17).

8. Einrichtung nach einem der Ansprüche 1 bis 7, dadurch gekennzeichnet, daß der Lagerspalt zwischen Lagerauge (2) und Nockenwelle (1) wenigstens nockenseitig z.B. mittels Radialwellendichtung (18) abgedichtet ist.

9. Einrichtung nach einem der Ansprüche 1 bis 8, dadurch gekennzeichnet, daß das offene Ende (20) der ersten Fettkammer (7) z.B. mittels Radialwellendichtung abgedichtet ist.

10. Einrichtung nach einem der Ansprüche 1 bis 9, dadurch gekennzeichnet, daß das offene Ende (20), ggf. einschließlich der Spannscheibe (4) mit dem Sicherungsring (5), von einer faltenbalgartigen Dichtmanschette (21) unter Bildung einer zweiten Fettkammer (22) übergriffen ist.

11. Einrichtung nach einem der Ansprüche 1 bis 10, dadurch gekennzeichnet, daß in die erste Fettkammer (7) eine verschließbare Schmierbohrung (23) mündet.

12. Einrichtung nach einem der Ansprüche 1 bis 11, dadurch gekennzeichnet, daß der Durchmesser (d₂) des innerhalb der ersten Fettkammer (7) liegenden Abschnitts (F) der Nockenwelle (1) geringfügig kleiner als der Durchmesser (d₁) des Lagerabschnitts (L) der Nockenwelle (1) ist.

13. Einrichtung nach nach einem der Ansprüche 1 bis 12, dadurch gekennzeichnet, daß der Durchmesser (d₃) des im Anschluß an die Verlängerung (8) des Lagerauges (2) außerhalb der ersten Fettkammer (7) liegenden Abschnitts (A) der Nockenwelle (1) geringfügig kleiner als der Durchmesser (d₂) des innerhalb der ersten Fettkammer (7) liegenden Abschnitts (F) der Nockenwelle (1) ist.

## Claims

1. Device for the bearing of the cam shaft (1) for the actuation of the brake blocks of a drum brake for vehicles and suchlike, where the cam shaft (1) is mounted by way of a bearing section (L) by means of a bearing bushing (9) in a bearing eye (2) of the brake bracket (3) and is held, for example by means of a tightening disc (4) and retaining ring (5), in such a way that it cannot be moved axially, and adjacent to the bearing section (L) carries a cam (6), for example S-shaped, for the actuation of the brake blocks, characterized in that the bearing eye (2) has on that side of the cam (6) beyond the bearing section (L) an extension (8) for the formation of a first grease chamber (7) surrounding the cam shaft (1), the extension (8) lies outside the brake and/or outside the cover plate for the brake and the tightening disc (4) covers the open end (20) of the first grease chamber (7).

2. Device according to claim 1,
characterized in that the bearing bushing (9) in its outer face (11) adjoining the inner face (10) of the bearing eye (2) and/or the bearing eye (2) in its inner face (10) adjoining the outer face (11) of the bearing bushing (9) has at least one circumferential groove (12, 13).

3. Device according to claim 2,
characterized in that the groove (12, 13) is connected to a grease entry bore (14).

4. Device according to claim 2 or 3,
characterized in that a grease supply duct (15) opens into the groove (12, 13).

5. Device according to one of claims 1 to 4,
characterized in that the bearing bushing (9) is constructed as a plastic bushing which is self-lubricating, for example impregnated with oil.

6. Device according to one of claims 1 to 5,
characterized in that the bearing bushing (9) has dry-running properties.

7. Device according to one of claims 1 to 6,
characterized in that the bearing bushing (9) is constructed as a two-component bushing, having an inner sliding layer (16), for example containing graphite, and an outer, for example metallic, carrier layer (17).

8. Device according to one of claims 1 to 7,
characterized in that the bearing gap between bearing eye (2) and cam shaft (1) is sealed at least on the cam side, for example by means of radial shaft sealing (18).

9. Device according to one of claims 1 to 8,
characterized in that the open end (20) of the first grease chamber (7) is sealed, for example, by means of radial shaft sealing.

10. Device according to one of claims 1 to 9,
characterized in that the open end (20), perhaps including the tightening disc (4) with the retaining ring (5), is overlapped by a bellows-like sealing sleeve (21) with the formation of a second grease chamber (22).

11. Device according to one of claims 1 to 10,
characterized in that a closable lubricating bore (23) opens into the first grease chamber (7).

12. Device according to one of claims 1 to 11,
characterized in that the diameter (d₂) of the section (F) of the cam shaft (1) lying within the first grease chamber (7) is slightly smaller than the diameter (d₁) of the bearing section (L) of the cam shaft (1).

13. Device according to one of claims 1 to 12,
characterized in that the diameter (d₃) of the section (A) of the cam shaft (1) lying connected to the extension (8) of the bearing eye (2) outside the first grease chamber (7) is slightly smaller than the diameter (d₂) of the section (F) of the cam shaft (1) lying within the first grease chamber (7).1

## Revendications

1. Dispositif pour supporter l'arbre à came (1) pour l'actionnement des mâchoires d'un frein à tambour pour véhicules et analogues, dans lequel l'arbre à came (1) est monté par une partie palier (L) au moyen d'une douille de palier (9) dans un logement de palier (2) du support de frein (3) et par exemple est tenu sans possibilité de déplacement dans la direction axiale par une rondelle élastique (4) et un anneau élastique (5) et porte, au voisinage de la partie palier (L), une came (6), par exemple en forme de S, destinée à actionner les mâchoires de frein, caractérisé par le fait que le logement de palier (2) présente, du côté opposé à la carne (6), un prolongement (8) qui s'étend au delà de la partie palier (L) pour former une première chambre à graisse (7) entourant l'arbre à carne (1), quel le prolongement (8) est situé à l'extérieur du frein et/ou à l'extérieur de la tôle de fermeture du frein et que la rondelle élastique (4) couvre l'extrémité (20) ouverte de la première chambre à graisse (7).

2. Dispositif selon la revendication 1, caractérisé par le fait que la douille de palier (9), au niveau de sa surface extérieure (11) contigue à la surface intérieure (10) du logement de palier (2), et/ou le logement de palier (2), au niveau de sa surface intérieure (10) contigue à la surface extérieure (11) de la douille de palier (9), présente au moins une rainure circulaire (12, 13).

3. Dispositif selon la revendication 2, caractérisé par le fait que la rainure (12, 13) communique avec un trou (14) d'arrivée de graisse.

4. Dispositif selon la revendication 2 ou 3, caractérisé par le fait qu'un conduit d'amenée de graisse (15) débouche dans la rainure (12, 13).

5. Dispositif selon l'une des revendications 1 à 4, caractérisé par le fait que la douille de palier (9) est agencée sous forme de douille autolubrifiante, par exemple en matière plastique imprégnée d'huile.

6. Dispositif selon l'une des revendications 1 à 5, caractérisé par le fait que la douille de palier (9) présente des propriétés de fonctionnement à sec.

7. Dispositif selon l'une des revendications 1 à 6, caractérisé par le fait que la douille de palier (9) est agencée sous forme de douille composite à deux matériaux avec une couche antifriction (16) intérieure, par exemple contenant du graphite et une couche support (17) extérieure, par exemple métallique.

8. Dispositif selon l'une des revendications 1 à 7, caractérisé par le fait que l'espace entre logement de palier (2) et arbre à came (1) est fermé de manière étanche côté came au moins, par exemple par un joint d'arbre (18) radial.

9. Dispositif selon l'une des revendications 1 à 8, caractérisé par le fait que l'extrémité ouverte (20) de la première chambre à graisse (7) est fermée par exemple par un joint d'arbre radial.

10. Dispositif selon l'une des revendications 1 à 9, caractérisé par le fait que l'extrémité ouverte (20) et le cas échéant la rondelle élastique (4) et l'anneau élastique (5) sont recouverts d'un manchon (21) d'étanchéité de type à soufflet en formant une deuxième chambre à graisse (22).

11. Dispositif selon l'une des revendications 1 à 10, caractérisé par le fait qu'un trou de graissage (23) qui peut être obturé débouche dans la première chambre à graisse (7).

12. Dispositif selon l'une des revendications 1 à 11, caractérisé par le fait que le diamètre (d₂) de la partie (F) de l'arbre à came (1) située dans la première chambre à graisse (7) est légèrement inférieur au diamètre (d₁) de la partie palier (L) de l'arbre à came (1).

13. Dispositif selon l'une des revendications 1 à 12, caractérisé par le fait que le diamètre (d₃) de la partie (A) de l'arbre à came (1) faisant suite au prolongement (8) du logement de palier (2) située à l'extérieur de la première chambre à graisse (7) est légèrement inférieur au diamètre (d₂) de la partie (F) de l'arbre à came (1) située dans la première chambre à graisse (7).
